Europäisches Patentamt

(19) European Patent Office

Office européen des brevets

(11) Veröffentlichungsnummer: **0 035 673**
B1

# EUROPÄISCHE PATENTSCHRIFT

(12)

(45) Veröffentlichungstag der Patentschrift:
12.09.84

(51) Int. Cl.³: **H 01 L 31/02,** H 01 L 33/00, G 02 B 7/26

(21) Anmeldenummer: **81101186.5**

(22) Anmeldetag: **19.02.81**

(54) Optische Koppelvorrichtung.

(30) Priorität: **29.02.80 DE 3007803**

(43) Veröffentlichungstag der Anmeldung:
**16.09.81 Patentblatt 81/37**

(45) Bekanntmachung des Hinweises auf die Patenterteilung:
**12.09.84 Patentblatt 84/37**

(84) Benannte Vertragsstaaten:
**CH FR GB LI**

(56) Entgegenhaltungen:
**DE - A - 2 611 168**
**DE - A - 2 741 585**
**FR - A - 2 418 943**
**FR - A - 2 446 497**

(73) Patentinhaber: **SIEMENS AKTIENGESELLSCHAFT,**
**Berlin und München Wittelsbacherplatz 2,**
**D-8000 München 2 (DE)**

(72) Erfinder: **Kirchhoff, Georg, Ing.grad., Weltistrasse 48,**
**D-8000 München 71 (DE)**
Erfinder: **Schön, Josef, Ing.grad.,**
**Hans-Thonauer-Strasse 35, D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine optische Koppelvorrichtung entsprechend dem Oberbegriff des Patentanspruches 1.

Eine solche optische Koppelvorrichtung ist aus der DE-A-2 611 168 bekannt und wird z.B. benötigt, um einen Lichtsender optisch an eine Glasfaser-Übertragungsstrecke anzukoppeln.

Bei der bekannten Vorrichtung kann die Fassung in der Kammer quer zur Achse des Gehäuseansatzes mit Hilfe eines Schraubbolzens verschoben werden, der gegen eine schräge Fläche der Fassung wirkt und die Fassung dabei gegen die Federwirkung einer Blattfeder verschiebt.

Solche Koppelvorrichtungen werden jedoch auch in Einrichtungen verwendet, die Erschütterungen oder Vibrationen ausgesetzt sind. Hierbei ist es erwünscht, eine Verschiebung der Fassung aus ihrer optimalen Lage sicher verhindern zu können.

Aufgabe vorliegender Erfindung ist es daher, eine Koppelvorrichtung der eingangs genannten Art so auszubilden, dass eine einmal eingestellte optimale Position der Fassung sicher erhalten bleibt.

Erfindungsgemäss ergibt sich die Lösung dieser Aufgabe durch eine den kennzeichnenden Merkmalen des Anspruches 1 entsprechende Ausbildung einer solchen Fassung.

Auf diese Weise werden die an sich zum Einführen von Manipulierstäben in die Kammer zur Justierung der Fassung vorgesehenen Fenster vorteilhaft zugleich als Eingussöffnungen für das sich verfestigende Giessharz genutzt.

Eine weitere Ausgestaltung der Erfindung ergibt sich aus den Merkmalen des Anspruches 2.

Mit Hilfe einer entsprechenden Materialwahl für die Gleitscheibe ist es dabei möglich, die sich einer Querverschiebung widersetzende Reibungskraft zu optimieren.

Ein Ausführungsbeispiel der optischen Koppelvorrichtung nach der Erfindung wird nachstehend anhand einer Figur noch näher erläutert.

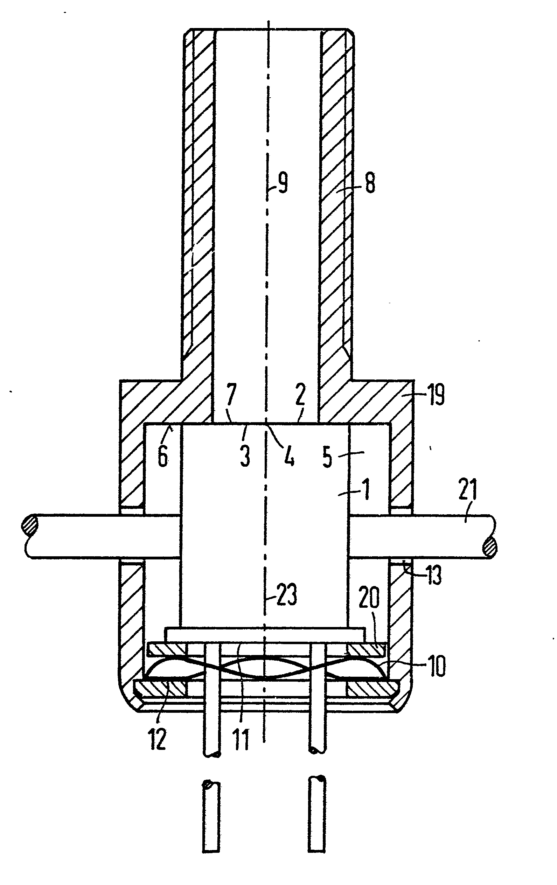

Im einzelnen ist der Figur zu entnehmen, dass die Koppelvorrichtung ein metallisches Gehäuse 19 aufweist, das eine Kammer 5 umgibt, in der eine Fassung 1 für z.B. eine lichtemittierende Diode angeordnet ist. Anstelle der Diode kann auch der Endabschnitt eines Lichtwellenleiters oder ein anderes Halbleiterbauelement in der Fassung 1 fixiert sein, wobei das andere Halbleiterbauelement z.B. als Lichtempfänger verwendet wird. Der optisch wirksame Oberflächenbereich 3 der lichtemittierenden Diode ist durch entsprechende Befestigung des Diodenkörpers in der Fassung 1 so angeordnet, dass er genau parallel zu einer Seitenwand 2 der Fassung 1 verläuft, die den Bereich 3 umgibt. Die Seitenwand 2 der Fassung 1 ist als Abstützfläche ausgebildet und liegt einer Kammerwand 6 an, die sich auf der Seite der Kammer 5 befindet, auf der ein hohlzylindrischer Ansatz 8 des Gehäuses 19 in die Kammer 5 mündet. Dabei ist die Kammerwand 6 genau rechtwinkelig zur Achse 9 des hohlzylindrischen Ansatzes 8 gerichtet. Der spielfreie Kontakt zwischen der Kammerwand 6 und der Seitenwand 2 der Fassung 1 wird durch ein Federelement 10 gewährleistet, das z.B. durch eine Wellfeder gebildet sein kann und zwischen der Kammerwand 12, die der Kammerwand 6 gegenüberliegt, und der vom Ansatz 8 abgewandten Seite 11 der Fassung 1 eingespannt ist.

Durch diesen Aufbau der Koppelvorrichtung wird sichergestellt, dass ein durch den Ansatz 8 auf die Achse 9 des Ansatzes zwangsjustierter Lichtwellenleiter mit seiner stirnseitigen Endfläche genau parallel zum optisch wirksamen Oberflächenbereich 3 der in der Fassung 1 fixierten lichtemittierenden Diode ausgerichtet ist.

Somit ist es nur noch erforderlich, die Mittelpunktsachse 23 des optisch wirksamen Oberflächenbereiches 3 mit der Achse 9 des Ansatzes 8 oder mit der Achse eines im Ansatz 8 fixierten Lichtwellenleiters (Glasfaser) zur Deckung zu bringen, um die Koppelbedingungen zu optimieren.

Bei dem in der Figur dargestellten Ausführungsbeispiel einer Koppelvorrichtung ist dazu die Kammer 5 quer zur Achse 9 so gross ausgebildet, dass die Fassung 1 mit ständig aneinanderliegenden Abstützflächen, die durch die Kammerwand 6 einerseits und die dieser Wand zugewandte Seitenwand 2 der Fassung 1 anderseits gebildet werden, in jeder Richtung quer zur Achse 9 verschoben werden kann.

Diese Querverschiebung kann z.B. mit Hilfe von Manipulierstäben 21 erfolgen, die durch Kammerfenster 13 in die Kammer 5 eingeführt werden können und auf die Fassung 1 einwirken.

Hat die Fassung 1 eine optimale Lage bezüglich der Achse 9 oder der Achse eines im Ansatz 8 fixierten Lichtwellenleiters erreicht, so wird die Fassung 1 in dieser Position durch die Reibung festgehalten, die zwischen der Kammerwand 6 und der Seitenwand 2 der Fassung 1 wirksam ist und die durch entsprechende Wahl der Federkraft des Federelementes 10 eingestellt werden kann.

Dabei ist zwischen dem Federelement 10 und der Fassung 1 zusätzlich eine Gleitscheibe 20 angeordnet, die einerseits zur gleichmässigen Druckverteilung dient und anderseits auch auf dieser Seite der Fassung 1 eine zu grosse Reibungshaftung zwischen der Fassung 1 und dem Federelement 10 verhindert. Diese soll ja nur so gross sein, dass sich die Fassung 1 nicht selbsttätig in der Kammer 5 verschieben kann.

Die Fenster 13 im Gehäuse 19 werden auch zum Eingiessen eines sich verfestigenden Giessharzes in die Kammer 5 verwendet, mit dem die Position der Fassung 1 in der Kammer 5 endgültig fixiert wird.

**Patentansprüche**

1. Optische Koppelvorrichtung mit einem Gehäuse, bei dem ein zur Aufnahme eines Endabschnittes eines Lichtwellenleiters vorgesehener, hohlzylindrischer Gehäuseansatz in eine zur Aufnahme einer Fassung für ein Halbleiterelement oder einen anderen Lichtwellenleiter eingerichtete Gehäusekammer mündet, wobei ein optisch wirksamer Oberflächenbereich des in der Fassung angeordneten Halbleiterelementes oder des anderen Lichtwellenleiters der kammerseitigen Mündung des Ansatzes zugewandt ist, und die Fassung mit einer Seitenwand, die den optisch wirksamen Oberflächenbereich umgibt, genau parallel zu diesem Bereich, und die Kammer mit einer Kammerwand auf der Seite der Mündung des Ansatzes genau rechtwinkelig zur Achse des Ansatzes ausgerichtet sind, und bei der die Seitenwand der Fassung und die Kammerwand aneinandergelegt und die Fassung mittels eines Federelementes, das zwischen einer von der Mündung des Ansatzes abgewandten Seitenwand der Fassung und einer dieser Seitenwand gegenüberliegenden Wand der Kammer angeordnet ist, gegen die Kammerwand gepresst ist, dadurch gekennzeichnet, dass die Kammer (5) Fenster (13), die zum Einführen von Manipulierstäben (21) in die Kammer (5) zur Verschiebung der Fassung (1) quer zur Achse (9) des Ansatzes (8) geeignet sind, aufweist, und dass durch diese Fenster (13) ein sich verfestigendes Giessharz in die Kammer (5) zur Fixierung der Fassung (1) in ihrer optimalen Lage eingegossen ist.

2. Koppelvorrichtung nach Anspruch 1, dadurch gekennzeichnet, dass zwischen dem Federelement (10) und der Fassung (1) eine Gleitscheibe (20) eingefügt ist.

## Claims

1. An optical coupling device having a housing, in which a hollow-cylindrical housing attachment which is provided to accommodate an end section of a light waveguide opens into a housing chamber provided to accommodate a holder for a semiconductor element or another light waveguide, wherein an optically-active surface area of the semiconductor element, or the other light waveguide, which is arranged in the holder, faces towards the opening of the attachment into the side of the chamber, and the holder is oriented with a side wall which surrounds the optically-active surface area precisely parallel to this area, and the chamber is oriented with a wall thereof on the side of the opening of the attachment precisely at right angles to the axis of the attachment, and wherein the side wall of the holder and the chamber wall abut against one another and the holder is pressed against the chamber wall by means of a spring member which is arranged between a side wall of the holder, which faces away from the opening of the attachment, and a wall of the chamber which lies opposite this side wall, characterised in that the chamber (5) is provided with windows (13) adapted to permit manipulating rods (21) to be introduced into the chamber (5) in order to displace the holder (1) transversely to the axis (9) of the attachment (8); and that, through these windows (13), a hardening casting resin is poured into the chamber (5) in order to vix the holder (1) in its optimum position.

2. A coupling device according to claim 1, characterised in that a sliding disc (20) is inserted between the spring member (10) and the holder (1).

## Revendications

1. Dispositif de couplage optique comportant un boîtier, dans lequel un embout cylindrique creux, prévu pour loger une section d'extrémité d'un guide d'ondes lumineuses, débouche dans une chambre du boîtier agencée pour recevoir une monture pour un composant à semiconducteurs ou un autre guide d'ondes lumineuses, et dans lequel un élément de surface, actif du point de vue optique, de l'élément à semiconducteurs disposé dans la monture ou de l'autre guide d'ondes lumineuses est tourné vers l'embouchure de l'embout, située du côté de la chambre, et la paroi latérale de la monture, qui entoure l'élément de surface actif du point de vue optique, est orientée de façon précise parallèlement à cet élément de surface, et une paroi de la chambre, située du côté de l'embouchure de l'embout, est alignée de façon précise perpendiculairement à l'axe dudit embout, et dans lequel la paroi latérale de la monture et la paroi de la chambre sont appliquées l'une contre l'autre et la monture est repoussée contre la paroi de la chambre au moyen d'un élément de ressort, qui est disposé entre une paroi latérale de la monture, tournée à l'opposé de l'embouchure de l'embout, et une paroi de la chambre, située en vis-à-vis de la paroi latérale, caractérisé par le fait que la chambre (5) comporte des fenêtres (13) qui sont appropriées pour l'introduction de barres de manipulation (21) dans la chambre (5) en vue de déplacer la monture (1) transversalement par rapport à l'axe (9) de l'embout (9) et qu'une résine de coulée durcissable est coulée par ces fenêtres (13) dans la chambre (5) pour fixer la monture (1) dans sa position optimale.

2. Dispositif de couplage suivant la revendication 1, caractérisé par le fait qu'un disque coulissant (20) est inséré entre l'élément de ressort (10) et la monture (1).